# EUROPEAN PATENT APPLICATION

(11) **EP 4 807 586 A1**
(43) Date of publication of application: **16.09.2026**
(21) Application number: 23959914.5
(22) Date of filing: 30.11.2023
(51) Int. Cl.: G06F 17/16

(54) **MEMORY DIE, MEMORY CONTROLLER, MEMORY CHIP, MEMORY APPARATUS, AND DEVICE**

(71) Applicant: Huawei Technologies Co., Ltd., Shenzhen, Guangdong 518129 (CN)
(72) Inventor: GAO, Feng, Shenzhen, Guangdong 518129 (CN); CHU, Yanxu, Shenzhen, Guangdong 518129 (CN); ZHANG, Xu, Shenzhen, Guangdong 518129 (CN)
(74) Representative: Epping - Hermann - Fischer
(86) International application number: PCT/CN2023/135709
(87) International publication number: WO 2025/112003

(57) **Abstract**

A memory component, a memory controller, a memory chip, a memory apparatus, and a device are provided, and relate to the field of computer technologies, to reduce a requirement of a model parameter matrix for a memory capacity during large-scale computation, and resolve a problem where a bus rate of a storage medium interface affects performance of the large-scale computation. The memory apparatus includes: a memory controller, configured to send a plurality of model parameter submatrices included in a model parameter matrix to a plurality of memory components, to store the plurality of model parameter submatrices in the plurality of memory components; and the plurality of memory components, configured to: concurrently compute an intermediate computation result between an input data matrix and respective at least one model parameter submatrix stored in each memory component, and send intermediate computation results respectively obtained by the memory components to the memory controller. The memory controller is further configured to compute a computation result between the input data matrix and the model parameter matrix based on the plurality of intermediate computation results that are correspondingly obtained by the plurality of memory components.

## Description

### TECHNICAL FIELD

This application relates to the field of computer technologies, and in particular, to a memory component, a memory controller, a memory chip, a memory apparatus, and a device.

### BACKGROUND

During deep learning inference computation, a multiplication operation usually needs to be performed on an input data matrix and a model parameter matrix, to obtain a computation result, and then a subsequent inference operation is performed. The multiplication operation between the input data matrix and the model parameter matrix is usually implemented by a computing system.

Currently, the computing system usually includes a host and a storage. The host includes a processor, a memory, and a storage interface. The storage is connected to the host through the storage interface. When the computing system performs model computation, the host reads, from the storage, a model parameter file required for the computation, and writes the model parameter file into the memory of the host. The processor reads the model parameter file from the memory and performs computation, to obtain a final computation result.

However, with continuous growth of a computation scale, the model parameter file required for the computation is increasingly large, leading to a continuously rising requirement of the computing system for a memory capacity. However, memory costs are high, and it is difficult to expand the memory in the existing computing system. Therefore, the memory of the computing system becomes a bottleneck for supporting large-scale computation.

### SUMMARY

This application provides a memory component, a memory controller, a memory chip, a memory apparatus, and a device, to reduce a requirement of a model parameter matrix for a memory capacity during large-scale computation, and resolve a problem where a bus rate of a storage medium interface cannot meet a bandwidth requirement of the large-scale computation, thereby improving computation performance. To achieve the foregoing objectives, the following technical solutions are used in embodiments of this application.

According to a first aspect, a memory component is provided. The memory component may be an unpackaged memory die or a memory chip. The memory component includes: one or more memory arrays, configured to receive and store at least one model parameter submatrix output by a memory controller, where the at least one model parameter submatrix is a model parameter submatrix in a plurality of model parameter submatrices included in a model parameter matrix, and another model parameter subrectangle other than the at least one model parameter submatrix in the plurality of model parameter submatrices is stored in another memory component disposed in an array with the memory component; and a computing circuit, configured to compute an intermediate computation result between the input data matrix and the at least one model parameter submatrix, where the intermediate computation result is used to compute a computation result between the input data matrix and the model parameter matrix. The plurality of model parameter submatrices corresponding to the model parameter matrix are stored across a plurality of different memory components in a distributed manner (for example, are stored across a plurality of different memory components in a distributed manner based on a concurrency degree of the memory components). Each memory component may compute, via the computing circuit, an intermediate computation result between the input data matrix and at least one model parameter submatrix stored in the memory component. A plurality of intermediate computation results that are correspondingly obtained by the plurality of memory components may be used to compute the computation result between the input data matrix and the model parameter matrix.

In the foregoing technical solution, the memory component stores, via the memory array, the at least one model parameter submatrix included in the model parameter matrix, and computes, via the computing circuit, the intermediate computation result between the input data matrix and the at least one model parameter submatrix. That is, the computing circuit is disposed in the memory component to allow the memory component to support a function of near-memory computing. In this case, the plurality of memory components of the model parameter matrix required for computation are stored in the plurality of memory components in a distributed manner, and computation between the input data matrix and the model parameter matrix is implemented through computation of the plurality of memory components, thereby improving matrix computation performance of a memory apparatus. According to this solution, a requirement of the model parameter matrix for a memory capacity during large-scale computation can be reduced, and a problem where a bus rate of a storage medium interface cannot meet a bandwidth requirement of the large-scale computation is resolved, thereby improving computation performance.

In a possible implementation of the first aspect, the memory component further includes: a control circuit, configured to output the intermediate computation result, for example, control the computing circuit to output the intermediate computation result. In the foregoing possible implementation, the control circuit of the memory component may output the intermediate computation result to the memory controller, so that the memory controller computes the computation result between the input data matrix and the model parameter matrix based on the plurality of intermediate computation results that are correspondingly obtained by the plurality of memory components, thereby improving the computation performance.

In a possible implementation of the first aspect, the control circuit is further configured to: receive a memory request, where the memory request includes the at least one model parameter submatrix; and store the at least one model parameter submatrix in the memory array based on the memory request. In the foregoing possible implementation, the control circuit of each memory component may store, in the memory array, the at least one model parameter submatrix included in the memory request. In this way, the plurality of model parameter submatrices of the model parameter matrix may be stored in different memory components based on the concurrency degree of the memory components.

In a possible implementation of the first aspect, the control circuit is further configured to: receive address indication information, and read the at least one model parameter submatrix from the memory array into the computing circuit based on the address indication information. For example, the address indication information includes a physical address and dimensions of each model parameter submatrix. In the foregoing possible implementation, the control circuit reads the at least one model parameter submatrix from the memory array into the computing circuit based on the address indication information. In this way, the computing circuit concurrently computes the intermediate computation result between the input data matrix and the at least one model parameter submatrix, thereby improving the matrix computation performance.

In a possible implementation of the first aspect, the control circuit is further configured to receive a computation request, where the computation request includes the input data matrix and the address indication information. In the foregoing possible implementation, the input data matrix and the address indication information are carried in the computation request, so that a quantity of interactions between the memory component and the memory controller can be reduced, and interaction efficiency is improved.

In a possible implementation of the first aspect, the memory component further includes: an input buffer, configured to buffer the input data matrix; and/or an output buffer, configured to buffer the intermediate computation result; and/or a read buffer, configured to buffer the at least one model parameter submatrix. In the foregoing possible implementation, efficiency of reading the input data matrix and the at least one model parameter submatrix and efficiency of outputting the intermediate computation result by the computing circuit in the memory component can be improved, thereby improving computation efficiency of the computing circuit.

In a possible implementation of the first aspect, the at least one model parameter submatrix is obtained by partitioning the model parameter matrix based on a concurrency degree of the memory component. Optionally, the memory component includes a plurality of memory planes, and each of the plurality of memory planes stores one model parameter submatrix. In the foregoing possible implementation, the model parameter matrix required for computation is partitioned and stored in the plurality of memory components based on a read concurrency granularity of the memory components, so that the plurality of memory components can concurrently compute the computation result between the input data matrix and the model parameter matrix, thereby improving the matrix computation performance. In a possible implementation of the first aspect, the control circuit is further configured to send memory status information to the memory controller, where the memory status information indicates the concurrency degree of the memory component. In the foregoing possible implementation, the memory status information is sent to the memory controller, so that the memory controller can determine the concurrency degree of the memory component based on the memory status information.

According to a second aspect, a memory chip is provided. The memory chip includes a plurality of memory components. The plurality of memory components are configured to perform computation between an input data matrix and a model parameter matrix. Each memory component is the memory component provided in any one of the first aspect or the possible implementations of the first aspect. A computation result between the input data matrix and the model parameter matrix is obtained through computation based on a plurality of intermediate computation results corresponding to the plurality of memory components. The plurality of memory components may be disposed in an array.

According to a third aspect, a memory controller is provided. The memory controller is configured to be coupled to a plurality of memory components. The plurality of memory components store a plurality of model parameter submatrices included in a model parameter matrix, and each memory component correspondingly stores at least one model parameter submatrix. The memory controller is configured to separately send an input data matrix to the plurality of memory components. The memory controller is further configured to: obtain a plurality of intermediate computation results, and compute a computation result between the input data matrix and the model parameter matrix based on the plurality of intermediate computation results, where the plurality of intermediate computation results are obtained by the plurality of memory components through separate computation between the input data matrix and the respective at least one model parameter submatrix stored in each memory component.

In a possible implementation of the third aspect, the memory controller is further configured to send the plurality of model parameter submatrices to the plurality of memory components based on a concurrency degree of the plurality of memory components, to store the plurality of model parameter submatrices in the plurality of memory components. In a possible implementation of the third aspect, the memory controller is further configured to partition the model parameter matrix into the plurality of model parameter submatrices.

In a possible implementation of the third aspect, a quantity of the plurality of model parameter submatrices is related to a quantity of the plurality of memory components and a quantity of a plurality of memory planes in each memory component.

In a possible implementation of the third aspect, the memory controller is further configured to: obtain memory status information of each of the plurality of memory components, and determine the concurrency degree of the plurality of memory components based on the memory status information of the plurality of memory components.

In a possible implementation of the third aspect, the memory controller is further configured to send memory requests to the plurality of memory components respectively, where a memory request corresponding to each memory component includes at least one model parameter submatrix in the plurality of model parameter submatrices.

In a possible implementation of the third aspect, the memory controller is further configured to send address indication information to the plurality of memory components respectively, where address indication information corresponding to each memory component is used to read the at least one model parameter submatrix stored in the memory component.

In a possible implementation of the third aspect, the memory controller is further configured to send computation requests to the plurality of memory components respectively, where a computation request corresponding to each memory component includes the input data matrix and the address indication information corresponding to the memory component.

According to a fourth aspect, a memory apparatus is provided. The memory device includes a plurality of memory components provided in any one of the first aspect or the possible implementations of the first aspect or the memory chip provided in the second aspect, and the memory controller provided in any one of the third aspect or the possible implementations of the third aspect.

According to a fifth aspect, an electronic device is provided. The electronic device includes a processor and the memory apparatus provided in the fourth aspect.

It may be understood that, for beneficial effects that can be achieved by any one of the memory chip, the memory controller, the memory apparatus, and the electronic device provided above, correspondingly refer to the beneficial effects of the memory component provided above. Details are not described herein again.

### BRIEF DESCRIPTION OF DRAWINGS

FIG. 1 is a diagram of a structure of a computing system;
FIG. 2 is a diagram of a structure of another computing system;
FIG. 3 is a diagram of a structure of a memory apparatus according to an embodiment of this application;
FIG. 4 is a diagram of storage of a model parameter matrix according to an embodiment of this application;
FIG. 5 is a schematic flowchart of storing a model parameter matrix according to an embodiment of this application;
FIG. 6 is a schematic flowchart of computing an input data matrix with a model parameter matrix according to an embodiment of this application;
FIG. 7 is a diagram of a structure of a memory component according to an embodiment of this application;
FIG. 8 is a diagram of a structure of a memory chip according to an embodiment of this application; and
FIG. 9 is a diagram of a structure of an electronic device according to an embodiment of this application.

### DESCRIPTION OF EMBODIMENTS

The making and use of embodiments are discussed in detail below. It should be appreciated, however, that many applicable inventive concepts provided in this application may be implemented in a plurality of specific environments. The specific embodiments discussed are merely illustrative of specific ways to implement and use this application and this technology, and do not limit the scope of this application. Unless otherwise defined, all technical terms used herein have the same meaning as those commonly known to a person of ordinary skill in the art.

The circuits or other components may be described as or referred to as "configured to" perform one or more tasks. In this case, the term "configured to" is used for implying a structure by indicating that a circuit/component includes a structure (for example, a circuit system) that performs one or more tasks during operation. Therefore, even when a specified circuit/component is currently not operable (for example, not turned on), the circuit/component may also be referred to as being configured to perform the task. Circuits/components used in conjunction with the "configured to" phrase include hardware, for example, a circuit for performing an operation.

The following describes technical solutions in embodiments of this application with reference to accompanying drawings in embodiments of this application. In this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one of the following items (pieces)" or a similar expression thereof means any combination of these items, including a singular item (piece) or any combination of plural items (pieces). For example, at least one item (piece) of a, b, or c may represent: a, b, c, a and b, a and c, b and c, or a, b, and c, where a, b, and c may be singular or plural.

In embodiments of this application, words such as "first" and "second" are used to distinguish between objects with similar names or functions or effects. A person skilled in the art may understand that the words such as "first" and "second" do not limit a quantity and an execution sequence. The term "coupling" is used to represent an electrical connection, including a direct connection through a wire or a connection end or an indirect connection through another device. Therefore, "coupling" should be considered as a generalized electronic communication connection.

In this application, the term "example", "for example", or the like is used to give an example, an illustration, or a description. Any embodiment or design scheme described as an "example" or "for example" in this application should not be explained as being more preferred or having more advantages than another embodiment or design scheme. To be precise, use of the term "example", "for example", or the like is intended to present a related concept in a specific manner.

Before embodiments of this application are described, an application scenario in this application is first described. During deep learning inference computation, a multiplication operation usually needs to be performed on an input data matrix and a model parameter matrix, to obtain a computation result, and then a subsequent inference operation is performed. With gradual emergence of various neural network models (for example, a large language model, an image operation model, and an image rendering model), a scale of a model parameter matrix gradually increases, leading to an explosive growth in corresponding computation amount. The multiplication operation between the input data matrix and the model parameter matrix is usually implemented by a computing system. Therefore, a memory capacity required for storing the model parameter matrix in the computing system also continuously increases.

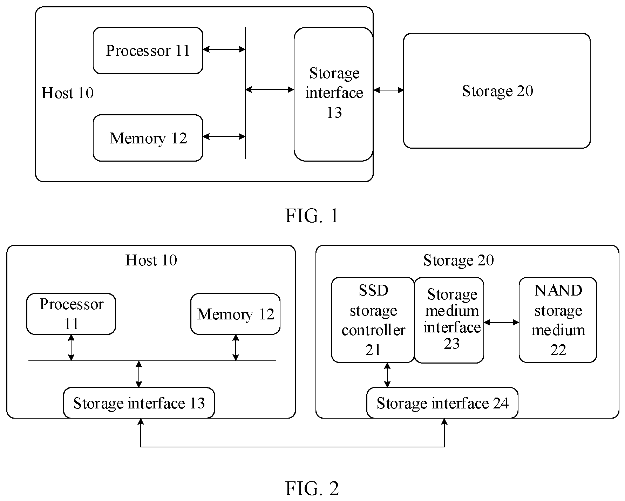

As shown in FIG. 1, a computing system usually includes a host 10 and a storage 20. The host 10 includes a processor 11, a memory 12, and a storage interface 13. The storage 20 is connected to the host 10 through the storage interface 13. When the computing system performs a model, the host 10 reads, from the storage 20, a model parameter matrix required for computation, and writes the model parameter matrix into the memory 12 of the host 10. The processor 11 reads the model parameter matrix from the memory 12 and performs computation, to obtain a final computation result. However, with continuous growth of a computation scale, the model parameter matrix required for the computation is increasingly large, leading to a continuously rising requirement of the computing system for a memory capacity. However, memory costs are high, and it is difficult to expand the memory in the existing computing system. Therefore, the memory of the computing system becomes a bottleneck for supporting large-scale computation.

In a related technology, a computing function that a host is responsible for is embedded in a solid-state drive (SSD) storage controller, to reduce a requirement for a memory capacity during large-scale computation. With reference to FIG. 1, as shown in FIG. 2, the storage 20 includes an SSD storage controller 21, a NAND (or nand) storage medium 22, a storage medium interface 23, and a storage interface 24. The storage interface 13 of the host 10 is connected to the storage interface 24 of the storage 20. The SSD storage controller 21 is connected to the NAND storage medium 22 through the storage medium interface 23. The SSD storage controller 21 is further connected to the storage interface 24. In the computing system, the SSD storage controller 21 has a matrix computation capability, and may read, based on a computation operation delivered by the host 10, a model parameter matrix stored in the NAND storage medium 22 into the SSD storage controller 21 for computation.

In the foregoing solution, the SSD storage controller 21 is connected to the NAND storage medium 22 through the storage medium interface 23. The storage medium interface 23 usually uses a standard interface protocol, for example, an open nand flash interface (ONFI) protocol. All these interface protocols have an upper limit of a data transmission rate. When a computation scale increases, a transmission rate of the storage medium interface 23 becomes a bottleneck for reading the model parameter matrix, thereby affecting overall computation performance. In addition, a higher rate required by the storage medium interface 23 means a larger transient current in a data transmission process.

Based on this, embodiments of this application provide a memory component, a memory controller, a memory chip, a memory apparatus, and a device. In the solution provided in embodiments of this application, a computing circuit is embedded in a memory component, a model parameter matrix required in a computing process is partitioned and stored based on a concurrency degree of a plurality of memory components, and high-performance computing power is provided for the computing system by using parallel computation of the plurality of memory components. Therefore, in this embodiment of this application, a requirement of the model parameter matrix for a memory capacity during large-scale computation can be reduced, and a problem where a bus rate of a storage medium interface cannot meet a bandwidth required by the large-scale computation is also resolved.

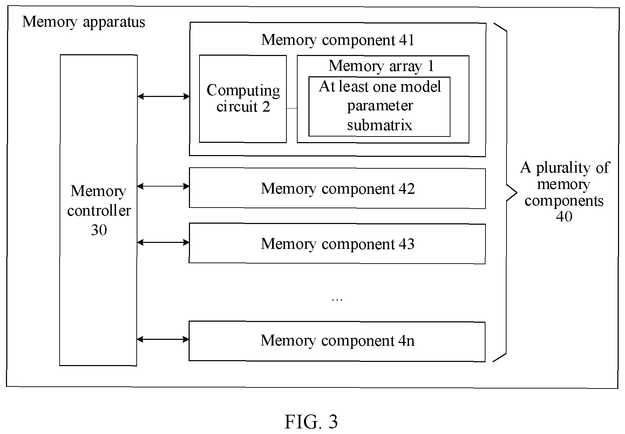

FIG. 3 is a diagram of a structure of a memory apparatus according to an embodiment of this application. The memory apparatus may be configured to implement computation between an input data matrix and a model parameter matrix based on a computation operation delivered by a host. The memory apparatus includes a memory controller 30 and a plurality of memory components 40 coupled to the memory controller 30. The plurality of memory components 40 may include a memory component 41 to a memory component 4n, and n is an integer greater than 1. Optionally, the plurality of memory components 40 may be disposed in an array.

The memory apparatus may be a storage or a memory device having a storage. The storage may be a non-volatile memory, or may be a volatile memory. For example, the storage may be any one of the following: an embedded multimedia card (eMMC), a universal flash storage (UFS), a NAND flash memory, a NOR flash memory, a solid-state drive (SSD), an SAS SSD, a SATA SSD, a non-volatile memory express (NVMe) SSD, a memory, a static random access memory (SRAM), a dynamic random access memory (DRAM), a magnetic disk, or the like. This is not specifically limited in embodiments of this application.

In addition, the plurality of memory components 40 may be a plurality of unpackaged memory dies, or may be a plurality of memory chips. One or more memory dies may be integrated in each memory chip. For example, the plurality of memory components 40 may be a plurality of NAND memory dies.

In addition, the model parameter matrix (or referred to as a model parameter file) may be a model parameter matrix corresponding to any neural network model. For example, the neural network model may be various neural network models such as a large language model or an image processing (for example, image rendering or image recognition) model. The computation between the input data matrix and the model parameter matrix may be referred to as matrix computation. When the method is applied to the field of image processing, the matrix computation may also be referred to as image computation.

In the memory apparatus, the memory controller 30 may be configured to send a plurality of model parameter submatrices included in the model parameter matrix to the plurality of memory components 40, to store the plurality of model parameter submatrices in the plurality of memory components 40. The plurality of model parameter submatrices may be partitioned in advance, or may be partitioned by the memory controller 30. For example, the memory controller 30 may partition the model parameter matrix into a plurality of model parameter submatrices, and store the plurality of model parameter submatrices in the plurality of memory components 40. Each of the plurality of memory components 40 may store at least one model parameter submatrix of the plurality of model parameter submatrices.

In a possible embodiment, the memory controller 30 may be configured to send the plurality of model parameter submatrices to the plurality of memory components 40 based on a concurrency degree of the plurality of memory components 40. In an implementation, the memory controller 30 may be configured to: partition the model parameter matrix into a plurality of model parameter submatrices based on the concurrency degree of the plurality of memory components 40, and send a memory request to each of the plurality of memory components 40 based on the concurrency degree of the plurality of memory components 40. The memory request sent to each memory component (or referred to as a memory request corresponding to each memory component) includes at least one model parameter submatrix in the plurality of model parameter submatrices. Correspondingly, each of the plurality of memory components 40 receives the memory request, and stores the at least one model parameter subrectangle included in the memory request. The model parameter submatrix may also be referred to as a shard or a slice, so that the model parameter matrix may include a plurality of shards or a plurality of slices. The concurrency degree may be a total quantity of storage units that are in the plurality of memory components 40 connected to the memory controller 30 and that can be concurrently accessed. The storage unit may be a storage unit of a specific memory granularity, and the storage unit may also be referred to as a concurrency unit.

Optionally, the memory controller 30 is further configured to: obtain memory status information of each of the plurality of memory components, and determine the concurrency degree of the plurality of memory components based on the memory status information of the plurality of memory components. The memory status information of each memory component may indicate statuses of a plurality of concurrency units of the memory component. When a concurrency unit is in a busy state, the concurrency unit is unavailable for a concurrent operation. When a concurrency unit is in an idle state, the concurrency unit is available for a concurrent operation. The memory controller 30 may actively obtain the memory status information of each memory component, or each memory component may send corresponding memory status information to the memory controller 30.

Optionally, a quantity of the plurality of model parameter submatrices is related to a quantity of the plurality of memory components 40 and a quantity of a plurality of memory planes (planes) in each memory component. In a possible implementation, the plurality of memory components 40 include n memory components, and each memory component includes m memory planes. If dimensions of the model parameter matrix are A rows by B columns and a size of each model parameter is s bytes, the memory controller 30 may partition the model parameter matrix into y model parameter submatrices, a size of each model parameter submatrix is x, and y and x satisfy the following formulas (1) and (2): $y = m \times n$ $x = A \times B \times s / y$

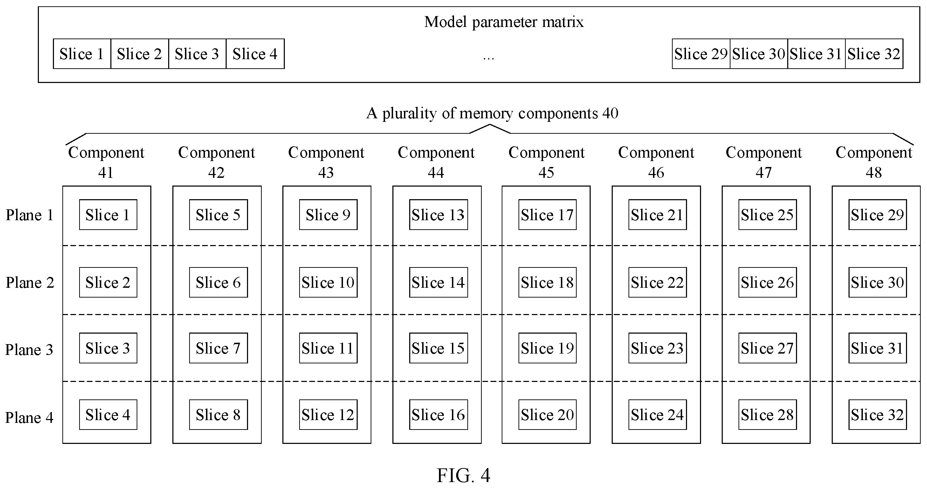

For example, the dimensions of the model parameter matrix are 4096×4096, the size of each model parameter is 4 bytes, the plurality of memory components 40 include eight memory components, and each memory component includes four memory planes, that is, A=4096, B=4096, s=4, n=8, and m=4. It may be learned from the foregoing description that the quantity y of the plurality of model parameter subrectangles is 32, and the size x of each model parameter subrectangle is 2097152 bytes. Further, as shown in FIG. 4, if the eight memory components are represented as a component 41 to a component 48, the 32 model parameter subrectangles are represented as a slice 1 to a slice 32, and the four memory planes are represented as a plane 1 to a plane 4, the memory controller 30 may be configured to: store the slice 1 to a slice 4 in four memory planes of the component 1 respectively; store a slice 5 to a slice 8 in four memory planes of a component 2 respectively; store a slice 9 to a slice 12 in four memory planes of a component 3 respectively; store a slice 13 to a slice 16 in four memory planes of a component 4 respectively; store a slice 17 to a slice 20 in four memory planes of a component 5 respectively; store a slice 21 to a slice 24 in four memory planes of a component 6 respectively; store a slice 25 to a slice 28 in four memory planes of a component 7 respectively; and store a slice 29 to the slice 32 in four memory planes of the component 8 respectively.

It may be understood that the foregoing description is provided by using an example in which each memory component includes a plurality of concurrent memory planes. In actual application, each memory component may alternatively include a plurality of concurrent memory areas of another granularity. In this case, the quantity of the plurality of model parameter submatrices may alternatively be related to the quantity of the plurality of memory components 40 and a quantity of the memory areas of the another granularity in each memory component. For example, the another granularity may include channel (channel), bank (bank), superblock (superblock), block (block), sub-block (sub-block), page (page), or the like. This is not specifically limited in embodiments of this application.

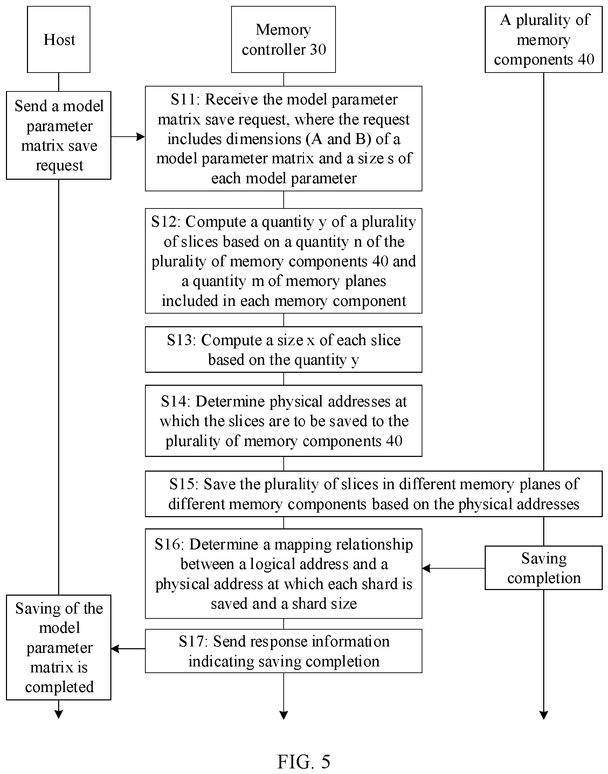

For example, as shown in FIG. 5, a process in which the memory controller 30 stores the model parameter matrix in the plurality of memory components may include the following steps. S11: Receive a model parameter matrix save request sent from the host (or a processor), where the save request includes the dimensions (A and B) of the model parameter matrix and the size s of each model parameter. S12: Compute the quantity y of the plurality of slices based on the quantity n of the plurality of memory components 40 and the quantity m of the memory planes included in each memory component. S13: Compute the size x of each slice based on the quantity y. S14: Determine physical addresses at which the slices are to be saved to the plurality of memory components 40. S15: Save the plurality of slices in different memory planes of different memory components based on the physical addresses. S16: After saving of the plurality of memory components 40 is completed, determine a mapping relationship between a logical address and a physical address at which each shard is saved and a shard size. S17: Send response information indicating saving completion of the model parameter matrix to the host, to notify the host of saving completion of the model parameter matrix.

In the memory apparatus, the memory controller 30 is further configured to separately send an input data matrix and address indication information to the plurality of memory components 40, where address indication information sent to each memory component (or referred to as address indication information corresponding to each memory component) is used to read the at least one model parameter submatrix stored in the memory component.

When sending the input data matrix and the address indication information to each memory component, the memory controller 30 may send the input data matrix and the address indication information to the memory component via a same message, or may send the input data matrix and the address indication information to the memory component via different messages. This is not specifically limited in embodiments of this application.

In a possible embodiment, the memory controller 30 may send a computation request to each of the plurality of memory components 40, and a computation request sent to each memory component (or referred to as a computation request corresponding to each memory component) may include the input data matrix and the address indication information corresponding to the memory component.

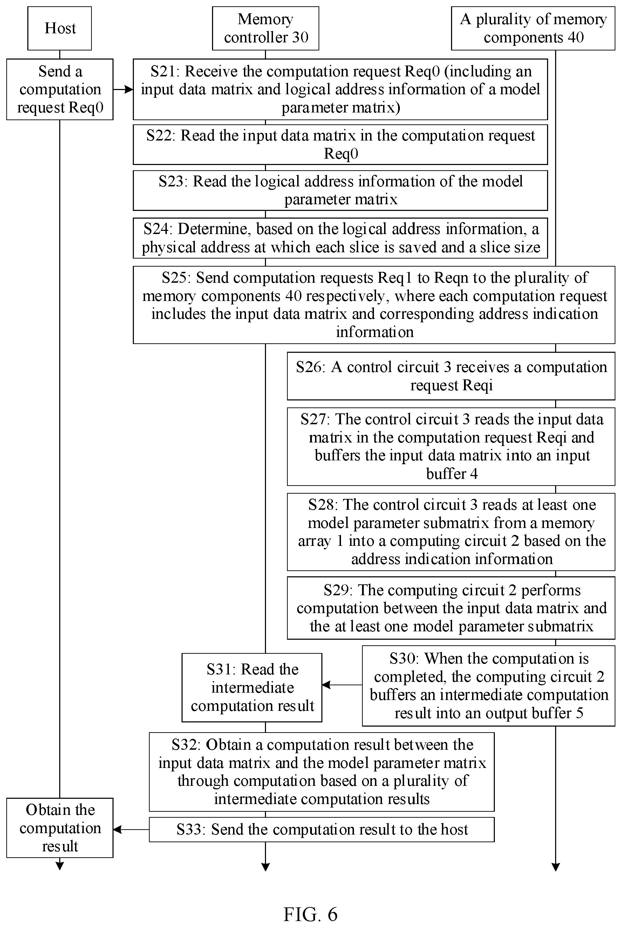

The input data matrix may be sent by the host to the memory controller 30. In a possible example, the host may send a computation request Req0 to the memory controller 30, where the computation request Req0 includes the input data matrix and logical address information of the model parameter matrix, and the computation request Req0 is used to request to perform the computation between the input data matrix and the model parameter matrix. Correspondingly, as shown in FIG. 6, a process in which the memory controller 30 sends the input data matrix and the address indication information to each memory component may include the following steps. S21: Receive the computation request Req0. S22: Read the input data matrix in the computation request Req0. S23: Read the logical address information of the model parameter matrix. S24: Determine, based on the logical address information, a physical address at which each slice is saved and a slice size. S25: Send computation requests Req1 to Reqn to the plurality of memory components 40 respectively, where each computation request includes the input data matrix and corresponding address indication information, and the address indication information may include a corresponding physical address and a corresponding slice size.

In the memory apparatus, each of the plurality of memory components 40 may include a memory array 1 and a computing circuit 2. Optionally, the computing circuit 2 may be a matrix computing circuit. In actual application, the computing circuit 2 may alternatively be another mathematical computing circuit, for example, a vector computing circuit, an array computing circuit, or a trigonometric function computing circuit. This is not specifically limited in embodiments of this application.

The memory array 1 may be configured to store at least one model parameter submatrix. The computing circuit 2 may be configured to compute an intermediate computation result between the input data matrix and the at least one model parameter submatrix, where the intermediate computation result is used to compute a computation result between the input data matrix and the model parameter matrix. Each memory component may include one or more memory arrays 1. This is not specifically limited in embodiments of this application.

Correspondingly, when each memory component obtains one intermediate computation result through computation, the plurality of memory components 40 may correspondingly obtain a plurality of intermediate computation results through computation. The plurality of memory components 40 may be further configured to send, to the memory controller 30, the intermediate computation results obtained by the memory components 40 respectively through computation. In this way, the memory controller 30 may obtain the plurality of intermediate computation results, and obtain the computation result between the input data matrix and the model parameter matrix through computation based on the plurality of computation results. Then, the memory controller 30 may further send the computation result between the input data matrix and the model parameter matrix to the host.

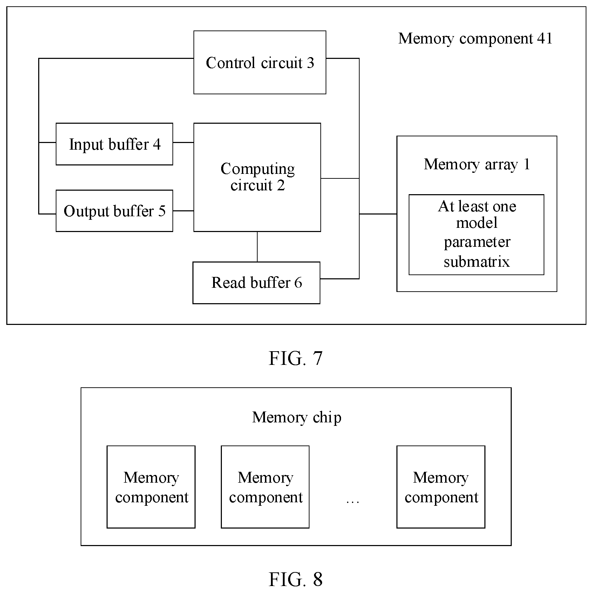

Optionally, as shown in FIG. 7, each memory component may further include a control circuit 3. The control circuit 3 may be configured to output the intermediate computation result, for example, control the computing circuit 2 to output the computing circuit. Further, as shown in FIG. 7, each memory component may further include: an input buffer 4, configured to buffer the input data matrix; and/or an output buffer 5, configured to buffer the intermediate computation result; and/or a read buffer 6, configured to buffer the at least one model parameter submatrix. In FIG. 7, the memory component 41 is used as an example for description.

In a possible embodiment, for any one of the plurality of memory components 40, the memory component may be further configured to receive and store at least one model parameter submatrix. For example, the control circuit 3 is further configured to: receive a memory request from the memory controller 30, where the memory request includes at least one model parameter submatrix; and store the at least one model parameter submatrix in the memory array 1 based on the memory request.

In another possible embodiment, for any one of the plurality of memory components 40, the memory component may be further configured to receive the input data matrix and the address indication information, where the address indication information is used to read the at least one model parameter submatrix. For example, the control circuit 3 is further configured to: receive the computation request from the memory controller 30, where the computation request includes the input data matrix and the address indication information, for example, the address indication information may include a physical address and corresponding dimension information of each subrectangle of the at least one model parameter submatrix; and read the at least one model parameter submatrix from the memory array 1 into the computing circuit 2 based on the address indication information. The computing circuit 2 may be configured to compute an intermediate computation result between the input data matrix and the at least one model parameter submatrix. Optionally, the control circuit 3 may read the at least one model parameter submatrix based on a maximum read concurrency granularity of the memory component.

Optionally, when the control circuit 3 receives the computation request, the control circuit 3 may further buffer the input data matrix into the input buffer 4. When the control circuit 3 reads the at least one model parameter submatrix from the memory array 1, the control circuit 3 may further buffer the at least one model parameter submatrix into the read buffer 6. When performing computation, the computing circuit 2 may obtain the input data matrix from the input buffer 4, and obtain the at least one model parameter submatrix from the read buffer. The computing circuit 2 may further buffer the intermediate computation result into the output buffer 5 when obtaining the intermediate computation result through computation.

It may be understood that the input buffer 4, the output buffer 5, and the read buffer 6 may alternatively be integrated into the computing circuit 2. In this way, the control circuit 3 may transmit the received input data matrix and the at least one read model parameter submatrix to the computing circuit 2, and the computing circuit 2 may alternatively locally buffer the intermediate computation result obtained through computation. This is not specifically limited in embodiments of this application.

In a possible example, as shown in FIG. 6, for any one of the plurality of memory components 40, the memory component may perform the following steps. S26: The control circuit 3 receives a computation request Reqi of the memory controller 30, where a value range of i is 1 to n. S27: The control circuit 3 reads the input data matrix in the computation request and buffers the input data matrix into the input buffer 4. S28: The control circuit 3 reads address indication information in the computation request, and reads the at least one model parameter submatrix from the memory array 1 to the computing circuit 2 based on the address indication information, where the address indication information may include a physical address and a slice size that correspond to the at least one model parameter submatrix. S29: The computing circuit 2 performs computation between the input data matrix and the at least one model parameter submatrix. S30: When the computation is completed, the computing circuit 2 buffers an intermediate computation result into the output buffer 5. Then, the memory controller 30 may perform the following steps. S31: Read intermediate computation results in output buffers 5 of the plurality of memory components 40 to obtain a plurality of intermediate computation results. S32: Obtain the computation result between the input data matrix and the model parameter matrix through computation based on the plurality of intermediate computation results. S33: The memory controller 30 notifies the host that the computation is completed, and sends the computation result to the host. In this way, the host may obtain the computation result.

Optionally, for any one of the memory components, when the memory component sends corresponding memory status information to the memory controller 30, the corresponding memory status information may be specifically sent to the memory controller 30 by the control unit 3.

In this embodiment of this application, the memory controller 30 may store, in the plurality of memory components 40 based on the concurrency degree of the plurality of memory components 40, the plurality of model parameter submatrices included in the model parameter matrix. The plurality of memory components 40 may concurrently compute an intermediate computation result between the input data matrix and the respective at least one model parameter submatrix stored in each memory component 40, and send the intermediate computation results respectively obtained by the memory components 40 to the memory controller 30. In this way, the memory controller 30 may compute the computation result between the input data matrix and the model parameter matrix based on the plurality of intermediate computation results that are correspondingly obtained by the plurality of memory components 40. Compared with the solution shown in FIG. 2, in this embodiment of this application, a computing circuit is disposed in a memory component to allow, without changing a structure of the memory apparatus, the memory component to support a function of near-memory computing. In addition, a model parameter matrix required for computation is stored in the memory component based on a read concurrency granularity of the memory component, thereby improving matrix computation performance of the memory apparatus. According to this solution, a requirement of the model parameter matrix for a memory capacity during large-scale computation can be reduced, and a problem where a bus rate of a storage medium interface cannot meet a bandwidth required by the large-scale computation is also resolved.

Based on this, an embodiment of this application further provides a memory component. A structure of the memory component may be as shown in the memory component 41 in FIG. 3, or as shown in the memory component 41 in FIG. 7. The memory component may include: a memory array 1, configured to receive and store at least one model parameter submatrix output by a memory controller, where the at least one model parameter submatrix is a model parameter submatrix in a plurality of model parameter submatrices included in a model parameter matrix, and another model parameter subrectangle other than the at least one model parameter submatrix in the plurality of model parameter submatrices is stored in another memory component disposed in an array with the memory component; and a computing circuit 2, configured to compute an intermediate computation result between an input data matrix and the at least one model parameter submatrix, where the intermediate computation result is used to compute a computation result between the input data matrix and the model parameter matrix.

Optionally, the at least one model parameter submatrix is obtained by partitioning the model parameter matrix based on a concurrency degree of the memory component. For example, the memory component includes a plurality of memory planes, and each of the plurality of memory planes stores one model parameter submatrix.

Further, the memory component further includes: a control circuit 3, configured to output the intermediate computation result, for example, control the computing circuit 2 to output the intermediate computation result.

In a possible implementation, the control circuit 3 is further configured to: receive a memory request, where the memory request includes the at least one model parameter submatrix; and store the at least one model parameter submatrix in the memory array 1 based on the memory request.

In another possible implementation, the control circuit 3 is further configured to: receive address indication information, and read the at least one model parameter submatrix from the memory array 1 into the computing circuit 2 based on the address indication information.

Optionally, the control circuit 3 is further configured to receive a computation request, where the computation request includes the input data matrix and the address indication information.

Further, the memory component further includes: an input buffer 4, configured to buffer the input data matrix; and/or an output buffer 5, configured to buffer the intermediate computation result; and/or a read buffer 6, configured to buffer the at least one model parameter submatrix.

In another embodiment of this application, a memory chip is further provided. As shown in FIG. 8, the memory chip includes a plurality of memory components, and any one of the plurality of memory components may be the memory component provided above. Optionally, the plurality of memory components are packaged in a same package structure, and the plurality of memory components may be a plurality of memory components disposed in an array. According to still another aspect of this application, a memory controller is further provided. The memory controller is configured to be coupled to a plurality of memory components. The plurality of memory components store a plurality of model parameter submatrices included in a model parameter matrix, and each memory component correspondingly stores at least one model parameter submatrix.

The memory controller is configured to: separately send an input data matrix to the plurality of memory components; and obtain a plurality of intermediate computation results, and compute a computation result between the input data matrix and the model parameter matrix based on the plurality of intermediate computation results. The plurality of intermediate computation results are obtained by the plurality of memory components through separate computation between the input data matrix and the respective at least one model parameter submatrix stored in each memory component.

Optionally, the memory controller is further configured to store the plurality of model parameter submatrices in the plurality of memory components based on a concurrency degree of the plurality of memory components. Further, the memory controller is further configured to partition the model parameter matrix into the plurality of model parameter submatrices. For example, a quantity of the plurality of model parameter submatrices is related to a quantity of the plurality of memory components and a quantity of a plurality of memory planes in each memory component.

In a possible implementation, the memory controller is further configured to send memory requests to the plurality of memory components respectively, where a memory request corresponding to each memory component includes at least one model parameter submatrix in the plurality of model parameter submatrices.

Optionally, the memory controller is further configured to send address indication information to the plurality of memory components respectively, where address indication information corresponding to each memory component is used to read the at least one model parameter submatrix stored in the memory component.

In another possible implementation, the memory controller is further configured to send computation requests to the plurality of memory components respectively, where a computation request corresponding to each memory component includes the input data matrix and the address indication information corresponding to the memory component.

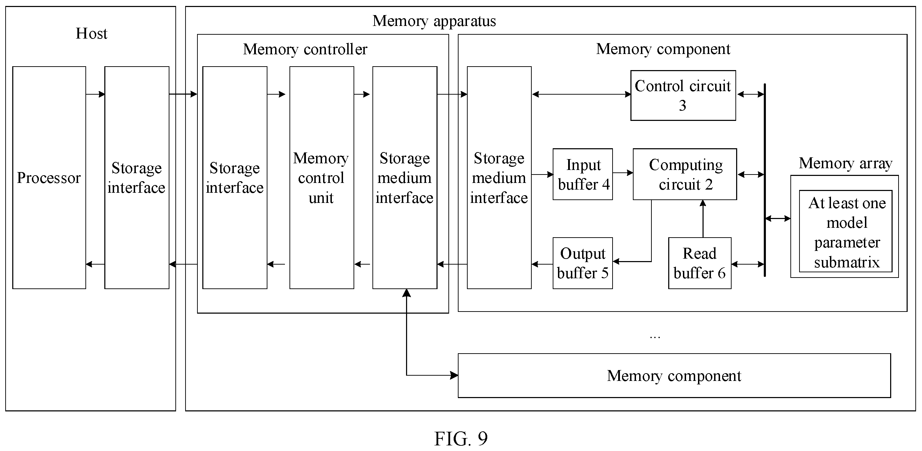

In another embodiment of this application, an electronic device is further provided. As shown in FIG. 9, the electronic device may include a processor and the memory apparatus provided above, and the memory apparatus may be any memory apparatus provided above.

Optionally, the memory controller may be coupled to the plurality of memory components through a storage medium interface. For example, the memory controller may include a memory control unit and the storage medium interface coupled to the plurality of memory components. Optionally, the processor may be coupled to the memory controller in the memory apparatus through a storage interface. For example, the processor is coupled to the storage interface, and the memory controller further includes a storage interface. The processor and the storage interface may also be collectively referred to as a host.

In actual application, the electronic device includes but is not limited to a mobile phone, a tablet computer, a notebook computer, a palmtop computer, an ultra-mobile personal computer (ultra-mobile personal computer, umPC), a mobile internet device (mobile internet device, MID), a netbook, a video camera, a camera, a wearable device (for example, a smartwatch or a smart band), a vehicle-mounted device (for example, a car, a bicycle, an electric vehicle, an airplane, a ship, a train, or a high-speed railway), a virtual reality (virtual reality, VR) device, an augmented reality (augmented reality, AR) device, a wireless terminal in industrial control (industrial control), a smart home device (for example, a refrigerator, a television, an air conditioner, or an electric meter), a smart robot, a workshop device, a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot air balloon, an uncrewed aerial vehicle, or an airplane), and the like.

It may be understood that all content in the embodiment corresponding to the foregoing memory apparatus may be correspondingly referenced to the embodiment of the memory component, the embodiment of the memory chip, the embodiment of the memory controller, and the embodiment of the electronic device. Details are not described in this embodiment of this application again.

In the several embodiments provided in this application, it should be understood that the disclosed memory apparatus, memory component, memory controller, electronic device, and the like may be implemented in other manners. For example, the described apparatus embodiment is merely an example. For example, division into the modules or units is merely logical function division and may be other division in actual implementation. For example, a plurality of units or components may be combined or integrated into another apparatus, or some features may be ignored or not performed.

The units described as separate parts may or may not be physically separate, and parts displayed as units may be one or more physical units, may be located in one place, or may be distributed across different places. Some or all of the units may be selected based on actual requirements to achieve the objectives of the solutions of embodiments.

If the integrated unit is implemented in a form of a software functional unit and is sold or used as an independent product, the integrated unit may be stored in a readable storage medium. The readable storage medium may include any medium that can store program code, for example, a USB flash drive, a removable hard disk, a read-only memory, a random access memory, a magnetic disk, or an optical disc. Based on such an understanding, the technical solutions in embodiments of this application essentially, or the part contributing to the conventional technology, or all or some of the technical solutions may be embodied in a form of a software product.

In another embodiment of this application, a readable storage medium is further provided. The readable storage medium stores computer-executable instructions. When a device (which may be a single-chip microcomputer, a chip, or the like) or a processor performs the function of the memory component in the foregoing embodiment.

In another embodiment of this application, a readable storage medium is further provided. The readable storage medium stores computer-executable instructions. When a device (which may be a single-chip microcomputer, a chip, or the like) or a processor performs the function of the foregoing memory controller.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the function of the memory component in the foregoing embodiment.

In still another embodiment of this application, a computer program product is further provided. The computer program product includes computer instructions, and the computer instructions are stored in a readable storage medium. At least one processor of a device may read the computer instructions from the readable storage medium, and the at least one processor executes the computer instructions to enable the device to perform the function of the memory controller in the foregoing method embodiment.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A memory component, wherein the memory component comprises:
a memory array, configured to receive and store at least one model parameter submatrix output by a memory controller, wherein the at least one model parameter submatrix is a model parameter submatrix in a plurality of model parameter submatrices comprised in a model parameter matrix, and another model parameter submatrix other than the at least one model parameter submatrix in the plurality of model parameter submatrices is stored in another memory component disposed in an array with the memory component; and
a computing circuit, configured to compute an intermediate computation result between an input data matrix and the at least one model parameter submatrix, wherein the intermediate computation result is used to compute a computation result between the input data matrix and the model parameter matrix.

2. The memory component according to claim 1, wherein the memory component further comprises:
a control circuit, configured to control the computing circuit to output the intermediate computation result.

3. The memory component according to claim 2, wherein the control circuit is further configured to:
receive a memory request, wherein the memory request comprises the at least one model parameter submatrix; and
store the at least one model parameter submatrix in the memory array based on the memory request.

4. The memory component according to claim 2 or 3, wherein the control circuit is further configured to:
receive address indication information, and read the at least one model parameter submatrix from the memory array into the computing circuit based on the address indication information.

5. The memory component according to claim 4, wherein the control circuit is further configured to:
receive a computation request, wherein the computation request comprises the input data matrix and the address indication information.

6. The memory component according to any one of claims 1 to 5, wherein the memory component further comprises:
an input buffer, configured to buffer the input data matrix; and/or
an output buffer, configured to buffer the intermediate computation result; and/or
a read buffer, configured to buffer the at least one model parameter submatrix.

7. The memory component according to any one of claims 1 to 6, wherein the at least one model parameter submatrix is obtained by partitioning the model parameter matrix based on a concurrency degree of the memory component.

8. The memory component according to claim 7, wherein the memory component comprises a plurality of memory planes, and each of the plurality of memory planes stores one model parameter submatrix.

9. The memory component according to any one of claims 2 to 8, wherein the control circuit is further configured to:
send memory status information to the memory controller, wherein the memory status information indicates the concurrency degree of the memory component.

10. A memory chip, wherein the memory chip comprises a plurality of memory components, the plurality of memory components are configured to perform computation between an input data matrix and a model parameter matrix, each memory component is the memory component according to any one of claims 1 to 9, and a computation result between the input data matrix and the model parameter matrix is obtained through computation based on a plurality of intermediate computation results corresponding to the plurality of memory components.

11. A memory controller, wherein the memory controller is configured to be coupled to a plurality of memory components, the plurality of memory components store a plurality of model parameter submatrices comprised in a model parameter matrix, and each memory component correspondingly stores at least one model parameter submatrix;
the memory controller is configured to separately send an input data matrix to the plurality of memory components; and
the memory controller is further configured to: obtain a plurality of intermediate computation results, and compute a computation result between the input data matrix and the model parameter matrix based on the plurality of intermediate computation results, wherein the plurality of intermediate computation results are obtained by the plurality of memory components through separate computation between the input data matrix and the respective at least one model parameter submatrix stored in each memory component.

12. The memory controller according to claim 11, wherein
the memory controller is further configured to send the plurality of model parameter submatrices to the plurality of memory components based on a concurrency degree of the plurality of memory components, to store the plurality of model parameter submatrices in the plurality of memory components.

13. The memory controller according to claim 12, wherein
the memory controller is further configured to partition the model parameter matrix into the plurality of model parameter submatrices.

14. The memory controller according to claim 12 or 13, wherein a quantity of the plurality of model parameter submatrices is related to a quantity of the plurality of memory components and a quantity of a plurality of memory planes in each memory component.

15. The memory controller according to any one of claims 12 to 14, wherein
the memory controller is further configured to: obtain memory status information of each of the plurality of memory components, and determine the concurrency degree of the plurality of memory components based on the memory status information of the plurality of memory components.

16. The memory controller according to any one of claims 11 to 15, wherein
the memory controller is further configured to send memory requests to the plurality of memory components respectively, wherein a memory request corresponding to each memory component comprises at least one model parameter submatrix in the plurality of model parameter submatrices.

17. The memory controller according to any one of claims 11 to 16, wherein
the memory controller is further configured to send address indication information to the plurality of memory components respectively, wherein address indication information corresponding to each memory component is used to read the at least one model parameter submatrix stored in the memory component.

18. The memory controller according to claim 17, wherein
the memory controller is further configured to send computation requests to the plurality of memory components respectively, wherein a computation request corresponding to each memory component comprises the input data matrix and the address indication information corresponding to the memory component.

19. A memory apparatus, wherein the memory apparatus comprises a plurality of memory components according to any one of claims 1 to 9 or the memory chip according to claim 10, and the memory controller according to any one of claims 11 to 18.

20. An electronic device, wherein the electronic device comprises a processor and the memory apparatus according to claim 19.
